# EUROPEAN PATENT APPLICATION

(11) **EP 2 007 162 A2**
(43) Date of publication of application: **24.12.2008**
(21) Application number: 07386015.7
(22) Date of filing: 18.06.2007
(51) Int. Cl.: H04Q 7/38

(54) **Non-3GPP IP access to E-UTRAN access inter-RAT handover**

(62) Divisional of application: 07016058.5
(71) Applicant: Motorola, Inc., Schaumburg, IL 60196 (US)
(72) Inventor: Salkintzis, Apostolis K., Athens 153 41 (GR)
(74) Representative: Papaconstantinou, Helen

(57) **Abstract**

A user equipment (UE) (210) prepares to hand over from a non-3GPP radio access (220) to a 3GPP radio access network (230) before executing the handover. During the preparation phase, the UE sends a pre-attach request message (330) through the non-3GPP radio access (220) to a Forward Attach Function (260) which authenticates the UE (210) and creates an MME context (348) for the UE (210). The FAF (260) sends a pre-attach accept message (350) through the non-3GPP radio access (220) to the UE (210) to complete the preparation phase. During the handover execution phase, the UE (210) sends a TAU request message through the 3GPP radio access network (230) to a Mobility Management Entity (MME) (240). The MME (240) interacts with the FAF (260) to obtain the previously-prepared MME Context. By authenticating the UE (210) and creating an MME context during the preparation phase, handover latency during execution can be reduced.

## Description

### FIELD OF THE DISCLOSURE

This disclosure relates generally to handover of a user equipment (UE) from one radio access system to another radio access system, specifically from a non-3GPP radio access to an Evolved Universal Terrestrial Radio Access Network (E-UTRAN) radio access using a single radio in the UE.

### BACKGROUND OF THE DISCLOSURE

Radio access systems defined by the Third Generation Partnership Project (3GPP) include the GSM EDGE Radio Access Network (GERAN), the Universal Terrestrial Radio Access Network (UTRAN), and the Evolved UTRAN (E-UTRAN). Various methodologies have been developed for handover of a UE from one type of Third Generation Partnership Project (3GPP) radio access system to another type of 3GPP radio access system. Such handovers are called inter-Radio Access Technology (inter-RAT) handovers.

For example, a UE can be handed over from a GERAN radio system or a UTRAN radio system to an E-UTRAN radio system and vice versa. According to 3GPP TS 23.401 Section 5.5.2.2, an inter-RAT handover from UTRAN or GERAN to E-UTRAN includes a preparation phase that sends information related to the 3GPP source access network (i.e., the current network serving the UE) to the E-UTRAN target access network. Next, the execution phase hands the UE from the 3GPP source network over to the 3GPP target network and transfers its ongoing sessions from the 3GPP source network to the 3GPP target network. Because the 3GPP organization develops the technical specifications of both the source network and the target network, 3GPP source access network information has been designed to be easily mapped to 3GPP target access network information.

Radio access systems not defined by the Third Generation Partnership Project (3GPP) are called non-3GPP Radio Access Technologies (RATs). Such non-3GPP RATs are found in systems such as WiMAX (defined by IEEE Standard 802.16), WiFi (defined by IEEE Standard 802.11), and CDMA2000 Evolution-Data Optimized (EV-DO) (defined by Third Generation Partnership Project 2, 3GPP2). Because non-3GPP radio systems are not related to 3GPP radio systems, it is typically very difficult (or even infeasible) to map non-3GPP source access network information (including non-3GPP security information) to target 3GPP access network information.

Although handover of a UE between a 3GPP system and a non-3GPP system is currently possible, executing a handover using a single-radio UE (i.e., using a single transceiver module) is slow because the target 3GPP access network information must be generated during the handover process without the benefit of using mapped information from the source access network (e.g., mapping the non-3GPP security information to the 3GPP security information). A faster handover would be beneficial - especially if the handover latency could be reduced without requiring any changes to pre-existing non-3GPP and 3GPP networks. The various aspects, features and advantages of the disclosure will become more fully apparent to those having ordinary skill in the art upon careful consideration of the following Drawings and accompanying Detailed Description.

### BRIEF DESCRIPTION OF THE DRAWINGS

FIG. 1 shows an evolved 3GPP architecture with a UE handing over from a non-3GPP IP access to a 3GPP access in accordance with an embodiment.

FIG. 2 shows an evolved 3GPP architecture with a UE handing over from WiMAX access to E-UTRAN access in accordance with an embodiment.

FIG. 3 shows a signal flow diagram for a preparation phase of a WiMAX to E-UTRAN handover in accordance with the embodiment shown in FIG. 2.

FIG. 4 shows a signal flow diagram for an execution phase of a WiMAX to E-UTRAN handover in accordance with the embodiment shown in FIG. 2.

### DETAILED DESCRIPTION

In order to reduce handover latency when a single-radio UE transfers from a non-3GPP RAT to an E-UTRAN, the UE pre-registers with the target E-UTRAN radio network using the source non-3GPP radio network. This pre-registration creates a 3GPP mobility management context (including a security context) for the UE that is valid for E-UTRAN access before the UE hands over to the target E-UTRAN network. In this manner, the time-consuming authentication and authorization procedures are performed during the pre-registration and can be skipped when the handover executes.

Pre-registration is supported by a Forward Attachment Function (FAF), which is a logical entity that can be located in an internet protocol (IP) server in an operator's IP network. Alternately, the FAF can be located (or co-located) anywhere in an evolved 3GPP architecture that supports secure source IP connectivity with the UE. As a further variant, an FAF's relay sub-element and the FAF's mobility management entity (MME) emulator sub-element can be distributed within the evolved 3GPP architecture.

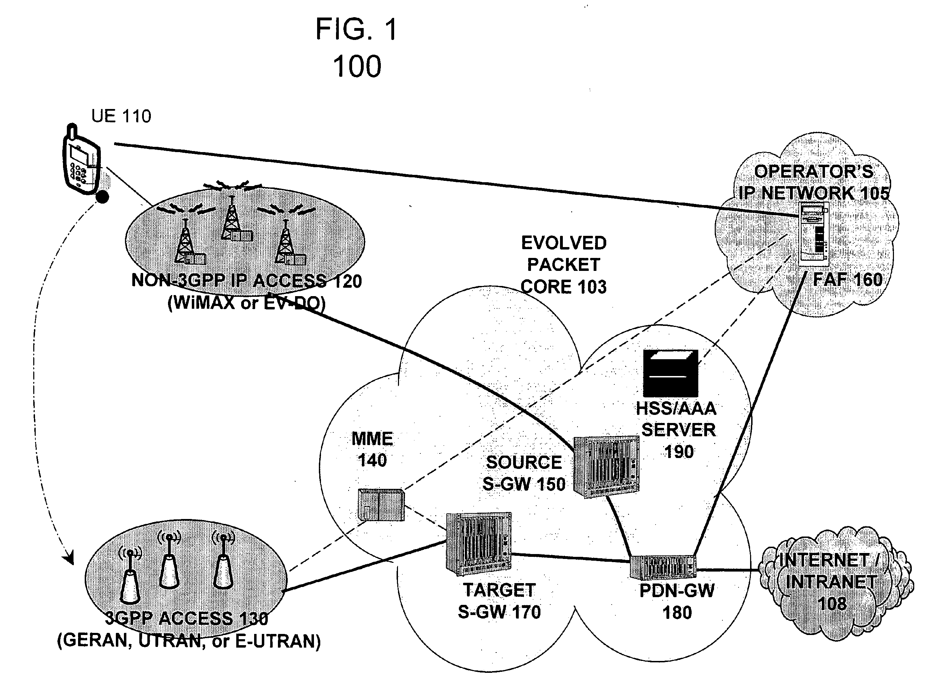

FIG. 1 shows an evolved 3GPP architecture 100 with a UE 110 handing over from a non-3GPP IP access 120 to a 3GPP access 130 in accordance with an embodiment. An evolved packet core 103 handles packet data communications and includes various serving gateways S-GW 150, 170, a packet data network gateway (PDN-GW) 180 to the Internet or an intranet 108 and/or an operator's IP network 105, and other entities such as a mobility management entity (MME) 140 and a Home Subscriber Server and Authentication, Authorization, and Accounting server (HSS/ AAA) 190. In accordance with 3GPP convention, user plane logical interfaces are represented by solid lines and control plane (signaling) logical interfaces are represented by dashed lines. For the sake of clarity, other elements of an evolved 3GPP architecture, such as a Policy and Charging Rules Function (PCRF), a Serving GPRS Support Node (SGSN), and an evolved Packet Data Gateway (ePDG) are omitted.

While the UE 110 is using the non-3GPP IP access 120 to the evolved packet core 103, the UE 110 can have a connection to the Internet or an intranet 108 (or to an operator's IP network 105) through a source serving gateway (source S-GW) 150 and a packet data network gateway (PDN-GW) 180. In some scenarios (e.g., when the UE is using its home evolved packet core), the UE 110 can have a connection to the Internet or an intranet 108 (or to an operator's IP network 105) directly through a PDN-GW without the need for a source S-GW. When the UE completes the handover from the non-3GPP IP access 120 to the 3GPP access 130, the connection from the 3GPP access 130 to the Internet or an intranet 108 (or the operator's IP network 105) will be through a target S-GW 170 and the PDN-GW 180.

The MME 140 manages and stores MME context for each UE within the 3GPP system. MME context includes idle state UE/user identities, each UE's mobility state, and security parameters (also called security context). The MME also generates temporary identities (e.g., temporary mobile subscriber identities (TMSIs)) and allocates them to UEs. It checks whether the UE may camp on any particular tracking area (TA) and also authenticates the user.

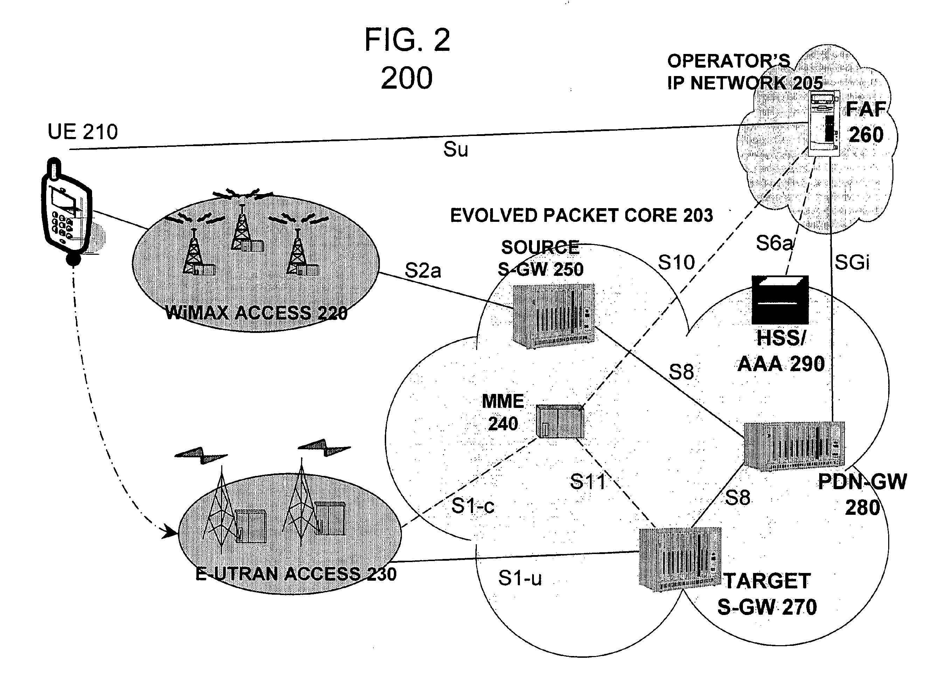

Authentication of a UE 110 takes place by using the HSS/AAA 190 of the UE's home network. (For the sake of clarity, FIG. 1 and FIG. 2 show a single evolved packet core which contains elements that can physically reside in a visited network and in a home network.) In accordance with an embodiment, information from the HSS/AAA 190 is used during a preparation phase of a handover from a non-3GPP IP access 120 to an E-UTRAN access 130. During the preparation phase, a Forward Access Function (FAF) 160 logical entity creates an MME context for the UE 110 before the handover is executed. The FAF 160 is shown located in an IP server in the operator's IP network 105 but can be located (or co-located or distributed) anywhere in an evolved 3GPP architecture 100 that supports secure source IP connectivity with the UE 110.

FIG. 2 shows an evolved 3GPP architecture 200 with a UE 210 handing over from WiMAX access 220 to E-UTRAN access 230 in accordance with an embodiment. FIG. 2 is a specific implementation of FIG. 1 and shows signaling details specific to WiMAX and E-UTRAN. Other implementations could substitute other non-3GPP radio access, such as WiFi or EV-DO radio access, for the WiMAX access 220.

Similar to FIG. 1, an evolved packet core 203 handles packet data communications and includes a source S-GW 250 (used when the UE is located in a visited network) and a target S-GW 270. A PDN-GW 280 connects to the S-GWs 250, 270 and to an operator's IP network 205. (The connection from the PDN-GW 280 to the Internet or an intranet is omitted from FIG. 2 for the sake of simplification.) The MME 240 and HSS/AAA 290 remain in the evolved packet core 203 as vital entities within the evolved 3GPP network. As mentioned before, the evolved packet core shown in FIG. 2 includes elements that can physically reside in a visited network (e.g., source S-GW 250 and target S-GW 270) and in a home network (e.g., HSS/ AAA 290).

While the UE 210 is using the WiMAX access 220 to the evolved packet core 203, the UE 210 can have a connection to the operator's IP network 205 (or to the Internet or an intranet) through a standard S2a reference point to a source S-GW 250, which uses a S8 reference point to connect to the PDN-GW 280. A standard SGi reference point connects the PDN-GW 280 to the operator's IP network 205. When the UE completes the handover from the WiMAX access 220 to the E-UTRAN access 230, the connection from the E-UTRAN access 230 to the operator's IP network 205 (or the Internet or an intranet) will be through a standard S1-u reference point to the target S-GW 270, a standard S8 reference point from the target S-GW 270 to the PDN-GW 280, and an SGi reference point from the PDN-GW 280 to the operator's IP network 205.

The MME 240 is interconnected within the evolved 3GPP architecture 200 in a standard manner through an S1-c reference point to the E-UTRAN access 230, an S11 reference point to the target S-GW 270, and an S10 reference point to the operator's IP network 205. The HSS/AAA 290 has an S6a reference point to the operator's IP network 205.

The FAF 260 is in communication with the UE 210 through an Su reference point. This Su reference point supports a secure source IP connection and can be implemented based on the standard Ut reference point which is specified in 3GPP TS 23.002.

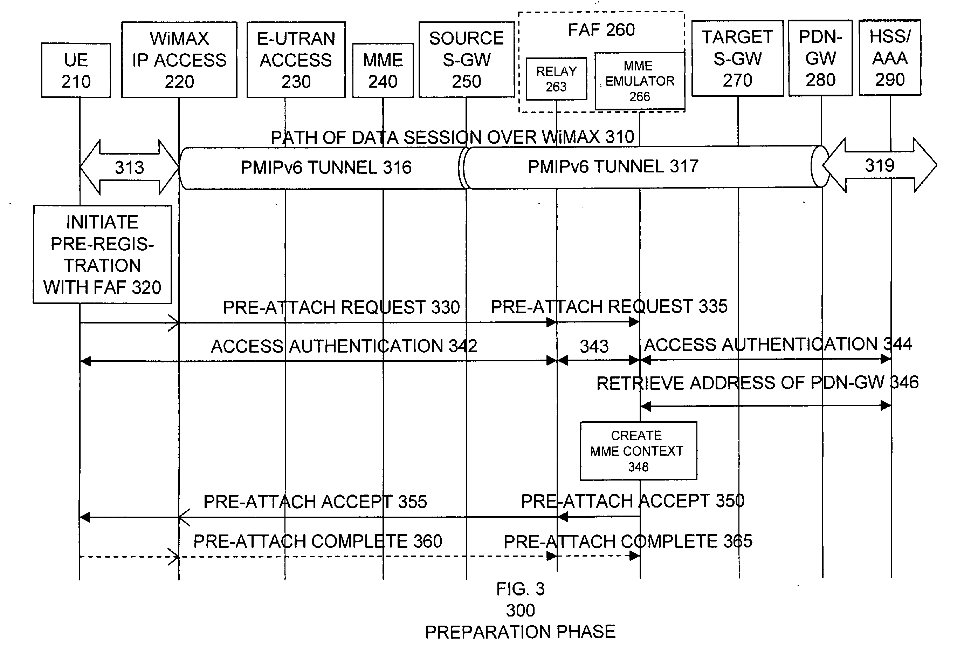

FIG. 3 shows a signal flow diagram 300 for a preparation phase of a WiMAX to E-UTRAN inter-RAT handover in accordance with the embodiment shown in FIG. 2. Although WiMAX is specifically shown, the principles described can be applied to other non-3GPP radio access such as WiFi and EV-DO. Each of the entities in FIG. 2 is shown as a logical element in FIG. 3 with the same reference numbers. As shown in this embodiment, the FAF 260 includes two sub-elements: a relay 263 and an MME emulator 266. The relay 263 transfers messages to and from the MME emulator 266 during the preparation phase. The MME emulator 266 creates a 3GPP mobility management context that is valid for E-UTRAN access for a UE that is not connected to a target E-UTRAN access 230. Also shown in this embodiment, the relay 263 and the MME emulator 266 are co-located within an FAF 260 that may be either within an operator's IP network or outside an operator's IP network. In an alternate embodiment, the MME emulator 266 may be incorporated into the MME 240 such that the sub-elements of the FAF 260 are distributed within both an operator's IP network 205 and an evolved packet core 203.

It is assumed that while the UE 210 is being served by the non-3GPP IP access, a first Proxy Mobile IPv6 (PMIPv6) tunnel is established between the non-3GPP access network and the source S-GW, and a second PMIPv6 tunnel is established between the source S-GW and the PDN-GW in the evolved packet core 203 (FIG. 2). If the source S-GW is not required (e.g., when the UE is not roaming) only one PMIPv6 tunnel is needed to communicate between the WiMAX IP Access 220 and the PDN-GW 280.

A data session over WiMAX 310 uses a data path having a radio access 313 from the UE 210 to the WiMAX IP access 220. The WiMAX IP access 220 uses a PMIPv6 tunnel 316 to communicate with a source S-GW 250 and the source S-GW 250 uses another PMIPv6 tunnel 317 to communicate with a PDN-GW 280 which then uses an IP connection 319 (over the standard SGi reference point) to an operator's IP network 205 (shown in FIG. 2) or the Internet or an intranet 108 (shown in FIG. 1). Thus, the UE 210 is using a non-3GPP access system and is being served by PDN-GW 280 and source S-GW 250. As mentioned before, in some non-roaming scenarios the use of a source S-GW is not required.

When the UE 210 discovers the E-UTRAN access 230, it may initiate 320 pre-registration with the FAF 260. An IP address of the relay 263 of the FAF 260 may be pre-configured within the UE 210 by a network operator or the relay 263 may be discovered by the UE 210 within an operator's IP network 205 (FIG. 2) using Dynamic Host Configuration Protocol (DHCP). The pre-registration starts with a pre-attach request message 330 sent from the UE 210 through the WiMAX IP access 220 to the relay 263 of the FAF 260. The pre-attach request message 330 includes some of the information required by the MME emulator 266 of the FAF 260 to build an MME context for the UE 210. The information may include an International Mobile Subscriber Identity (IMSI), IP address, Access Point Name (APN), and/or Bearer Information of the UE 210. The Bearer Information includes parameters identifying the properties (e.g., QoS settings) of the current communication bearers used by the UE 210. When the pre-attach request message 330 is received, the relay 263 forwards the pre-attach request message 335 to the MME emulator 266. Note that the MME emulator 266 will be building a 3GPP mobility management context for E-UTRAN access. This context is not required by the non-3GPP IP access 220 but will be required by the E-UTRAN access 230 when the handover is executed.

Next, the MME emulator 266 of the FAF 260 contacts the HSS/AAA 290 and authenticates 342, 343, 344 the UE 210. After successful authentication, the MME emulator 266 retrieves 346 the address of the PDN-GW 280 that is currently serving the UE 210 and creates 348 an MME context for the UE 210. MME context includes information provided by the UE 210 in the pre-attach request message 330 (e.g., IMSI, IP address, APN, and/or Bearer Information) as well as a security context (e.g., security information from the HSS/AAA 290 and security keys/algorithms pertaining to the UE 210) and perhaps some pre-configured values such as sequence numbers. The MME emulator 266, however, does not perform a Location Update procedure (which would otherwise be performed by a standard MME in the case where the UE attaches to an Evolved Packet Core 203 through E-UTRAN). As a consequence, the UE 210 is not reachable over the E-UTRAN access 230 while it is still using the non-3GPP access 220.

Again emulating some functions of an MME, the MME emulator 266 of the FAF 260 allocates a Tracking Area Identity (TAI), a S-Temporary Mobile Subscriber Identity (S-TMSI), and an S-TMSI-Signature (used for identification checking purposes) for the UE 210 and includes those values in the MME context. The FAF 260 next sends a pre-attach accept message 350, 355 to the UE 210 through the WiMAX IP access 220. The pre-attach accept message 350 would include the TAI, S-TMSI, and S-TMSI-Signature to allow the UE to attach later to E-UTRAN by using these parameters. The UE 210 may respond to the relayed pre-attach accept message 355 with a pre-attach complete message 360 (relayed using message 365) to acknowledge the reception of the S-TMSI value, if necessary. At this point, the preparation phase (or pre-registration) of the WiMAX to E-UTRAN inter-RAT handover is complete. The execution phase starts when the UE initiates handover execution using a Tracking Area Update (TAU) procedure.

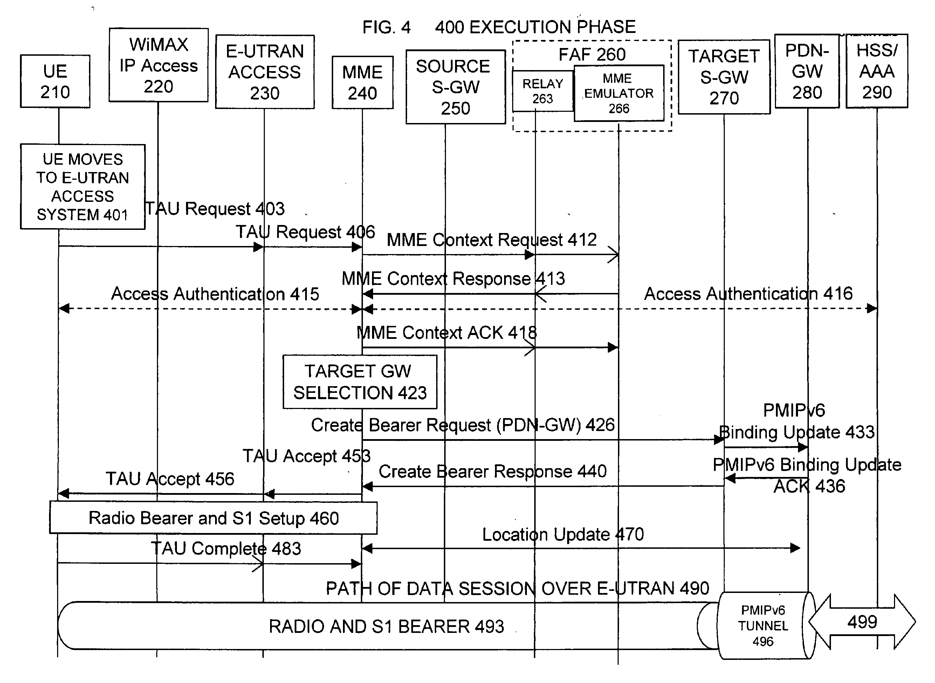

FIG. 4 shows a signal flow diagram 400 for an execution phase of a WiMAX to E-UTRAN inter-RAT handover in accordance with the embodiment shown in FIG. 2. When the UE moves 401 from the WiMAX IP access 220 to the E-UTRAN access 230, it sends a Tracking Area Update (TAU) request 403 which includes the TAI, S-TMSI, and S-TMSI signature values received from the FAF 260 in the pre-attach accept message 350, 355 (FIG. 3) of the preparation phase. This TAU request message 403 is routed as a TAU request message 406 to an MME 240 in the E-UTRAN network selected by the UE 210.

The MME 240 sends an MME Context Request message 412 to the IP address of the relay 263 portion of the FAF 260, which is resolved from the received TAI value in accordance with 3GPP TS 23.401. The MME emulator 266 of the FAF 260 responds through the relay 263 with an MME Context Response message 413 that contains all the context information normally returned by a standard MME, such as security keys/algorithms, UE capabilities, bearer information, and address of the PDN-GW 280. Optionally, the MME 240 may re-authenticate the UE 210 using access authentication messages 415, 416 in order to refresh the security information (e.g., security keys and algorithms) associated with UE 210. When the MME context is received successfully from MME emulator 266 of the FAF 260, the MME 240 sends an MME context acknowledgement 418 to the MME emulator 266 though the relay 263 of the FAF 260.

Next, the MME 240 selects 423 a target S-GW 270 as described in 3GPP TS 23.401 Section 5.3.3 and sends a Create Default Bearer Request message 426 to the target S-GW 270. The message 426 includes the IP address of the PGN-GW 280 that was provided by the FAF 260 in the MME Context Response message 413.

Based on the Create Default Bearer Request message 426 from the MME 240, the target S-GW 270 initiates a PMIPv6 registration procedure towards the PDN-GW 280 by sending a PMIPv6 Proxy Binding Update 433 according to Proxy MIPv6 IETF draft specification (draft-ietf-netlmm-proxymip6). The PDN-GW 280 responds with a PMIPv6 Proxy Binding Update acknowledgement 436 and updates its mobility binding, which effectively switches the PMIPv6 tunnels 316, 317 (FIG. 3) to have end points between the PDN-GW 280 and the target S-GW 270. In the PMIPv6 Proxy Binding Update acknowledgement 436, the PDN-GW 280 responds with the same IP address or prefix that was assigned to the UE 210 earlier (when the UE was allocated an IP address for access through the non-3GPP network). A PMIPv6 tunnel 496 now exists between the PDN-GW 280 and the target S-GW 270.

The target S-GW 270 returns a Create Default Bearer Response message 440 to the MME 240 as specified in 3GPP TS 23.401 Section 5.3.3. This message includes the IP address of the UE 210 and serves as an indication to the MME 240 that the binding has been successful.

The MME 240 creates new TAI and S-TMSI values (and possibly a new S-TMSI-Signature) and returns a TAU Accept message 453 to the E-UTRAN Access 230 with the new information. It is routed to the UE 210 using TAU Accept message 456. In parallel, the radio bearer and S1 bearer are set up 460 in accordance with 3GPP TS 23.401 Section 5.3.2 and with 3GPP TS 23.402 annex C. Next, the MME 240 performs a Location update procedure 470 according to 3GPP TS 23.401 Section 5.3.3.

The UE 210 responds to the TAU Accept message 456 with a TAU Complete message 483 according to 3GPP TS 23.401 Section 5.3.3 step 19. Although the TAU Complete message is shown as optional in the Section 5.3.3 it is required in this situation because the S-TMSI has changed. Now, the UE 210 can resume data communication over a path of a data session over E-UTRAN 490. The path includes a radio and S1 bearer signaling connection 493 between the UE 210 and the target S-GW 270, the PMIPv6 tunnel 496 between the target S-GW 270 and the PDN-GW 280, and an IP connection 499 to an operator's IP network 205 (shown in FIG. 2) or the Internet or an intranet 108 (shown in FIG. 1).

By moving some time-consuming authorization and authentication procedures to a preparation phase of a non-3GPP IP access to E-UTRAN access inter-RAT handover, and using an FAF with an MME emulator, the latency of handover execution can be reduced. Instead of a non-3GPP IP access to E-UTRAN access inter-RAT handover looking like a complete attach (with authentication, MME context creation, and radio and S1 bearer setup), the handover execution now behaves much like a simpler Tracking Area Update procedure in accordance with 3GPP TS 23.401 Section 5.3.3 with the FAF performing some of the functions of the old MME in Figure 5.3.-1. Because the handover execution behaves like a Tracking Area Update procedure, time-consuming authentication and authorization procedures can be skipped during the handover execution. Thus, the non-3GPP IP access to E-UTRAN access inter-RAT handover reduces latency of handover execution using a single radio while avoiding any changes to the evolved packet core.

Although the FAF 260 is shown as having a relay 263 co-located with an MME emulator 266, the MME emulator 266 may alternately be co-located with an MME 240. In that situation, the relay 263 of the FAF 260 would receive messages from the UE 210 and relay messages to the MME/MME emulator and vice versa. If a co-located MME emulator 266 were incorporated into a standard MME 240, the result would be a modified MME. Although this would force a change to the Evolved Packet Core 203, the single-radio UE handover latency would still be decreased relative to existing non-3GPP to 3GPP inter-RAT handovers.

While this disclosure includes what are considered presently to be the embodiments and best modes of the invention described in a manner that establishes possession thereof by the inventors and that enables those of ordinary skill in the art to make and use the invention, it will be understood and appreciated that there are many equivalents to the embodiments disclosed herein and that modifications and variations may be made without departing from the scope and spirit of the invention, which are to be limited not by the embodiments but by the appended claims, including any amendments made during the pendency of this application and all equivalents of those claims as issued.

It is further understood that the use of relational terms such as first and second, top and bottom, and the like, if any, are used solely to distinguish one from another entity, item, or action without necessarily requiring or implying any actual such relationship or order between such entities, items or actions. Much of the inventive functionality and many of the inventive principles are best implemented with or in software programs or instructions. It is expected that one of ordinary skill, notwithstanding possibly significant effort and many design choices motivated by, for example, available time, current technology, and economic considerations, when guided by the concepts and principles disclosed herein will be readily capable of generating such software instructions and programs with minimal experimentation. Therefore, further discussion of such software, if any, will be limited in the interest of brevity and minimization of any risk of obscuring the principles and concepts according to the present invention.

As understood by those in the art, an FAF includes a processor that executes computer program code to implement the methods described herein. Embodiments include computer program code containing instructions embodied in tangible media, such as floppy diskettes, CD-ROMs, hard drives, or any other computer-readable storage medium, wherein, when the computer program code is loaded into and executed by a processor, the processor becomes an apparatus for practicing the invention. Embodiments include computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

## Claims

1. An evolved Third Generation Partnership Project (3GPP) system architecture comprising:
a non-3GPP IP radio access;
a packet data network gateway (PDN-GW) coupled to the non-3GPP radio access;
a target serving gateway (S-GW) coupled to the PDN-GW;
a 3GPP radio access coupled to the target S-GW;
a 3GPP Mobility Management Entity (MME) coupled to the target S-GW; and
a Forward Attach Function (FAF) coupled to the PDN-GW having
an MME emulator for creating an MME context for a user equipment (UE) when the UE is communicating through the non-3GPP IP radio access and
a relay for relaying messages between the UE and the MME emulator and between the MME emulator and the MME.

2. A system architecture according to claim 1 further comprising:
a source S-GW coupled between the non-3GPP radio access and the PDN-GW.

3. A system architecture according to claim 1 wherein the relay is located within an operator's internet protocol (IP) network.

4. A system architecture according to claim 3 wherein the MME emulator is located within an operator's IP network.

5. A system architecture according to claim 3 wherein the MME emulator is located within an evolved packet core.

6. A method for handing over a user equipment (UE) from a non-3GPP radio access to a 3GPP radio access network comprising:
receiving a pre-attach request message from the UE including a unique identifier for the UE through the non-3GPP radio access;
receiving security information for the UE from a home subscriber server (HSS) and authenticating the UE;
creating a mobility management context for the UE including the unique identifier for the UE, a tracking area identifier, a temporary identifier for the UE, and a security context for the UE; and
transmitting a pre-attach accept message through the non-3GPP access to the UE including the tracking area identifier and the temporary identifier for the UE.

7. A method according to claim 6 wherein the pre-attach request message further comprises:
an IP address of the UE and an Access Point Name (APN) of the UE.

8. A method according to claim 6 wherein the pre-attach request message further comprises:
Bearer Information for the UE.

9. A method according to claim 6 wherein the security context for the UE comprises the security information and a security key.

10. A method according to claim 6 wherein the mobility management context further comprises:
an IP address of the UE and an Access Point Name (APN) of the UE.

11. A method according to claim 6 wherein the mobility management context further comprises:
Bearer Information for the UE.

12. A method according to claim 6 wherein the temporary identifier for the UE comprises:
an S-Temporary Mobile Subscriber Identity (S-TMSI) and an S-TMSI-Signature.

13. A method according to claim 6 wherein the receiving a pre-attach request message comprises:
receiving the pre-attach request message at a relay and sending the pre-attach request message to a mobility management entity (MME) emulator.

14. A method according to claim 13 wherein the MME emulator performs the step of receiving security information for the UE.

15. A method according to claim 14 wherein the MME emulator performs the step of creating a mobility management context for the UE.

16. A method according to claim 15 wherein the transmitting comprises:
sending the pre-attach accept message from the MME emulator to the relay; and
sending the pre-attach accept message from the relay to the UE through the non-3GPP radio access.

17. A method according to claim 6 further comprising:
receiving a pre-attach complete message.

18. A method according to claim 6 further comprising:
receiving a mobility management context request message; and
transmitting a mobility management context response providing the mobility management context.

19. A method for a user equipment (UE) to hand over from a non-3GPP radio access to a 3GPP radio access network comprising:
transmitting a pre-attach request message including a unique identifier for the UE through a non-3GPP radio access to a Forward Attach Function (FAF);
participating in authentication of the UE by the FAF; and
receiving a pre-attach accept message through the non-3GPP access from the FAF that includes a tracking area identifier and a temporary identifier for the UE.

20. A method according to claim 19 further comprising:
sending a Tracking Area Update request to a 3GPP radio access network.
